# EUROPÄISCHE PATENTSCHRIFT

(11) **EP 1 590 381 B1**
(45) Veröffentlichungstag und Bekanntmachung des Hinweises auf die Patenterteilung: **07.06.2006**
(21) Anmeldenummer: 04704595.0
(22) Anmeldetag: 23.01.2004
(51) Int. Cl.: C08F 10/10, C08F 110/10, C08F 4/14, C08F 4/06

(54) **VERFAHREN ZUR HERSTELLUNG VON POLYISOBUTEN**
METHOD FOR PRODUCING POLYISOBUTENE
PROCEDE DE PRODUCTION DE POLYISOBUTENE

(30) Priorität: 24.01.2003 DE 10303212
(43) Veröffentlichungstag der Anmeldung: 02.11.2005
(73) Patentinhaber: BASF Aktiengesellschaft, 67056 Ludwigshafen (DE)
(72) Erfinder: RATH, Hans, Peter, 67269 Grünstadt (DE); PERNER, Thomas, 76879 Esslingen (DE); MACH, Helmut, 69115 Heidelberg (DE)
(74) Vertreter: Reitstötter - Kinzebach
(86) Internationale Anmeldenummer: PCT/EP2004/000569
(87) Internationale Veröffentlichungsnummer: WO 2004/065432

(56) Entgegenhaltungen:
- EP-A- 0 896 967
- EP-A- 1 026 175
- EP-A- 1 081 165
- US-A- 5 286 823

## Beschreibung

Die vorliegende Erfindung betrifft ein Verfahren zur Herstellung von Polyisobuten mit einem Gehalt an endständigen Vinylidengruppierungen von wenigstens 75 mol-%.

Unter endständigen Vinylidengruppierungen oder endständigen Doppelbindungen werden im Sinne der vorliegenden Anmeldung solche Doppelbindungen verstanden, deren Lage im Polyisobutenmakromolekül durch die allgemeine Formel 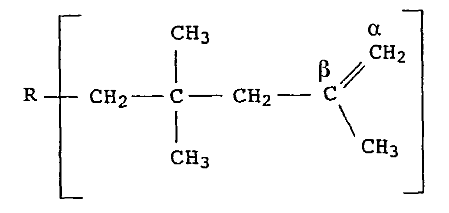 beschrieben wird, in der R für einen Polyisobutenylrest steht. Die Art und der Anteil der im Polyisobuten vorhandenen Doppelbindungen kann mit Hilfe von ¹H oder ¹³C-NMR-Spektroskopie bestimmt werden.

Solche hochreaktiven Polyisobutene werden als Zwischenprodukt zur Herstellung von Additiven für Schmier- und Kraftstoffe verwendet, wie sie beispielsweise in der DE-A 27 02 604 beschrieben sind. Die höchste Reaktivität zeigen die endständigen Vinylidengruppen mit 2-Methyl-Substitution, wohingegen Neopentylsubstitution oder die weiter im Inneren der Makromoleküle liegenden Doppelbindungen je nach ihrer Lage im Makromolekül keine oder nur eine geringe Reaktivität in den üblichen Funktionalisierungsreaktionen zeigen. Der Anteil an endständigen Vinylidengruppierungen im Molekül ist daher das wichtigste Qualitätskriterium für diesen Polyisobutentypus.

Die US 5,286,823 beschreibt ein Verfahren zur Herstellung hochreaktiver Polyisobutene durch kationische Polymerisation von Isobuten in Gegenwart von Bortrifluorid und sekundären Alkoholen mit 3 bis 20 Kohlenstoffatomen und/oder Ethern mit 2 bis 20 Kohlenstoffatomen.

Die WO 93/10063 offenbart Bortrifluorid-Etherat-Komplexe, worin der Ether wenigstens über ein an das Ethersauerstoffatom gebundenes tertiäres Kohlenstoffatom verfügt. Die Komplexe dienen zur Polymerisation von Olefinen, insbesondere Isobuten, zu Polymeren mit hohem Gehalt an Vinylidengruppierungen.

Die EP-A 1 026 175 beschreibt die Herstellung von Isobutenpolymeren mit wenigstens 80 mol-% Molekülen mit terminaler Vinylidenstruktur unter Verwendung von Komplexkatalysatoren aus Bortrifluorid, Ether und Alkohol und/oder Wasser in bestimmten Mengen.

Das erzielbare Molekulargewicht des Polyisobutens hängt - neben anderen Faktoren - entscheidend von der auf die eingesetzten Olefinmonomere bezogenen relativen Menge des Bortrifluorid-Komplex-katalysators ab. Mit höheren Katalysatormengen werden niedrigere Molekulargewichte erreicht und umgekehrt. Die erforderliche Menge an Bortrifluorid stellt bei der Herstellung niedermolekularer Polyisobutene einen beträchtlichen Kostenfaktor dar. Die Entsorgung der - in eine wässrige Phase extrahierten - Katalysatordeaktivierungsprodukte bringt außerdem eine erhebliche Abwasserbelastung mit sich. Die US 6,407,186 und die WO02/40553 empfehlen daher Verfahren zur Abtrennung und Rückführung des Katalysators.

Der Erfindung liegt daher die Aufgabe zugrunde, ein Verfahren zur Herstellung von Polyisobuten mit einem hohen Gehalt an endständigen Vinylidendoppelbindungen bereitzustellen, bei dem bei einer gegebenen relativen Menge an Bortrifluorid-katalysator niedrigere Molekulargewichte erhalten werden oder die Katalysatormenge verringert werden kann, um ein gegebenes Molekulargewicht zu erhalten.

Erfindungsgemäß wird diese Aufgabe gelöst durch ein Verfahren zur Herstellung von Polyisobuten mit einem Gehalt an endständigen Vinylidendoppelbindungen von wenigstens 75 mol-%, bei dem man Isobuten oder isobutenhaltige Kohlenwasserstoffgemische in flüssiger Phase in Gegenwart eines Bortrifluorid-Komplex-Katalysators der Zusammensetzung

(BF₃)ₐ . L¹_{b} . L²_{c} . L³_{d}

polymerisiert, wobei
- L¹ für Wasser, ein primäres C₁-C₅-Alkanol und/oder ein sekundäres C₃-C₅-Alkanol steht,
- L² für wenigstens einen Aldehyd und/oder Keton steht,
- L³ für einen Ether mit wenigstens 5 Kohlenstoffatomen, ein sekundäres Alkanol mit wenigstens 6 Kohlenstoffatomen, ein primäres Alkanol mit wenigstens 6 Kohlenstoffatomen und/oder ein tertiäres Alkanol steht,
- das Verhältnis b:a im Bereich von 0,9 bis 3,0, vorzugsweise 1,1 bis 2,5, liegt,
- das Verhältnis c:a im Bereich von 0,01 bis 0,5, vorzugsweise 0,04 bis 0,3, liegt,
- das Verhältnis d:a im Bereich von 0 bis 1,0, vorzugsweise 0,1 bis 1, insbesondere 0,1 bis 0,6, liegt.

Als Einsatzstoffe (Isobuten-Feedstock) für das erfindungsgemäße Verfahren kommen sowohl Reinisobuten als auch Isobuten-haltige Kohlenwasserstoffmischungen, beispielsweise Butadien-arme C₄-Raffinate aus Crackern oder C₄-Schnitte der Isobutan-Dehydrierung mit Isobutengehalten von mehr als 40 Gew.-% in Frage. Es können inerte Lösungsmittel, wie gesättigte Kohlenwasserstoffe, beispielsweise Pentan, Hexan, Isooctan oder halogenierte Kohlenwasserstoffe, wie Dichlormethan oder Trichlormethan, mitverwendet werden.

Als Katalysatoren werden im erfindungsgemäßen Verfahren Bortrifluorid-Komplexe mit wenigstens einem unter Wasser, primären C₁-C₅-Alkanolen und sekundären C₃-C₅-Alkanolen ausgewählten Starter, wenigstens einem unter Aldehyden und Ketonen ausgwähltem Regler und gegebenenfalls wenigstens einem unter Ethern mit wenigstens 5 Kohlenstoffatomen, sekundären Alkanolen mit wenigstens 6 Kohlenstoffatomen, primären Alkanolen mit wenigstens 6 Kohlenstoffatomen und tertiären Alkanolen ausgewählten Solubilisator verwendet. Die spezifische Kombination von Starter und Regler beeinflusst die Polymerisationsaktivität des Bortrifluorids so, dass die Polymerisation zum einen ein niedermolekulares Polyisobuten ergibt und zum anderen die Isomerisierungsaktivität des Bortrifluorids hinsichtlich der Isomerisierung von endständigen Doppelbindungen zu im Inneren des Polyisobutenmoleküls gelegenen, nicht oder nur wenig reaktiven Doppelbindungen verringert wird. Die Begriffe "Starter", "Regler" und "Solubilisator" dienen lediglich der Veranschaulichung.

Bei den Startern L¹ handelt es sich um Verbindungen mit einem an ein Sauerstoffatom gebundenen Wasserstoffatom ohne wesentliche sterische Hinderung. Sie werden als "Starter" bezeichnet, weil ihr aktives Wasserstoffatom am Anfang der wachsenden Polyisobutenkette eingebaut wird. Als L¹ sind beispielsweise Wasser, Methanol, Ethanol, 2-Propanol und/oder 1-Propanol geeignet. Davon ist Methanol am meisten bevorzugt.

Als Regler L² dienen erfindungsgemäß Aldehyde und/oder Ketone, die üblicherweise ein bis 20, vorzugsweise 2 bis 10 Kohlenstoffatome umfassen und in denen vorzugsweise andere funktionelle Gruppen als die Carbonylgruppe abwesend sind. Als L² sind beispielsweise Formaldehyd, Acetaldehyd, Propionaldehyd, n-Butyraldehyd, iso-Butyraldehyd, Aceton, Methylethylketon und Diethylketon geeignet. Dabei ist Aceton am meisten bevorzugt.

Die Solubilisatoren L³ haben eine löslichkeitsvermittelnde Wirkung und erhöhen die Löslichkeit des Katalysatorkomplexes im Einsatzmaterial. Es handelt sich um Ether mit wenigstens 5 Kohlenstoffatomen oder langkettige und/oder sterisch gehinderte Alkohole, die eine Abschirmung gegen den Zutritt von Isobutenmolekülen bieten. Man verwendet vorzugsweise Dialkylether mit 5 bis 20 Kohlenstoffatomen, ein sekundäres Alkanol mit 6 bis 20 Kohlenstoffatomen, ein primäres Alkanol mit 6 bis 20 Kohlenstoffatomen und/oder ein tertiäres C₄-C₂₀-Alkanol. Werden primäre Alkanole verwendet, weisen diese vorzugsweise eine β-Verzweigung auf, d. h. eine Verzweigung an dem benachbarten Kohlenstoffatom zum Kohlenstoffatom, das die Hydroxylgruppe trägt. Geeignete Vertreter sind beispielsweise unter Methyl-tert-butylether, Di-n-butylether, Di-n-hexylether, Dioctylether, 2-Ethylhexanol, 2-Propylheptanol, den Oxoalkoholen von Di-, Tri- und Tetramerpropylen und Di- und Trimerbuten, linearen 1-Alkoholen (die z. B. durch die Alfol®-Verfahren erhältlich sind), sofern sie unter Reaktionsbedingungen flüssig sind, wie n-Hexanol oder n-Octanol, und tert-Butanol ausgewählt. Davon ist 2-Ethylhexanol am meisten bevorzugt.

Die Bortrifluorid-Komplex-Katalysatoren können vor ihrem Einsatz vorgeformt werden oder in situ im Polymerisationsreaktor erzeugt werden, wie dies in der EP-A 628 575 beschrieben ist. Als Rohstoff zur Herstellung der Bortrifluorid-Komplex-Katalysatoren wird zweckmäßigerweise gasförmiges Bortrifluorid benutzt, wobei technisches, noch geringe Mengen Schwefeldioxid und SiF₄ enthaltendes Bortrifluorid (Reinheit: 96,5 Gew.-%), vorzugsweise aber hochreines Bortrifluorid (Reinheit: 99,5 Gew.-%) verwendet werden kann. Besonders bevorzugt wird Siliciumtetrafluorid-freies Bortrifluorid zur Katalysatorherstellung verwendet.

Pro mol Olefinmonomere setzt man vorzugsweise 0,1 bis 25 mmol, insbesondere 0,5 bis 10 mmol Komplexkatalysator, berechnet als Bortrifluorid, ein.

Die Polymerisation des Isobutens erfolgt vorzugsweise nach einem kontinuierlichen Verfahren. Dazu kann in an sich herkömmlichen Reaktoren, wie Rohrreaktoren, Rohrbündelreaktoren oder Rührkesseln gearbeitet werden. Vorzugsweise erfolgt die Polymerisation in einem Schlaufenreaktor, also einem Rohr- oder Rohrbündelreaktor mit stetigem Umlauf des Reaktionsgutes, wobei in der Regel das Verhältnis von Zulauf zu Umlauf Z/U im Bereich von 1:5 bis 1:500, vorzugsweise im Bereich von 1:10 bis 1:200 v/v, variiert werden kann.

Die Polymerisation erfolgt zweckmäßigerweise bei Temperaturen unterhalb 0 °C, vorzugsweise bei Temperaturen im Bereich von 0 bis -40 °C, insbesondere im Bereich von 0 bis -30 °C und besonders bevorzugt im Bereich von -10 bis -30 °C. In der Regel wird die Polymerisation bei einem Druck im Bereich von 0,5 bis 20 bar (absolut) durchgeführt. Die Wahl des Druckbereichs richtet sich in erster Linie nach den verfahrenstechnischen Bedingungen. So empfiehlt es sich bei Rührkesseln, unter Siedekühlung und damit unter Eigendruck, d. h. Unterdruck, zu arbeiten, wohingegen Umlaufreaktoren (Schlaufenreaktoren) bei Überdruck besser arbeiten. Zugleich wird durch Druck und Turbulenz die Bortrifluorideinmischung beschleunigt, so dass dieser Reaktortyp bevorzugt ist. Auf das Resultat der Polymerisationsreaktion ist jedoch die Wahl des Druckes in der Regel unerheblich.

Vorzugsweise wird die Polymerisation unter isothermen Bedingungen durchgeführt. Da die Polymerisationsreaktion exotherm verläuft, muss in diesem Fall die Polymerisationswärme abgeführt werden. Dies geschieht in der Regel mit Hilfe einer Kühlvorrichtung, die beispielsweise mit flüssigem Ammoniak als Kühlmittel betrieben werden kann. Eine andere Möglichkeit besteht darin, die Polymerisationswärme durch Siedekühlung auf der Produktseite des Reaktors abzuführen. Dies geschieht durch Verdampfung des Isobutens und/oder anderer, leicht flüchtiger Bestandteile des Isobuten-Feedstocks. Die Art der Kühlung hängt von dem jeweils verwendeten Reaktortyp ab. Rohrreaktoren werden vorzugsweise mittels Außenkühlung gekühlt, wobei die Reaktionsrohre beispielsweise mittels eines Kühlmantels mit siedendem Ammoniak gekühlt werden. Rührkesselreaktoren werden bevorzugt durch Innenkühlung, z. B. mittels Kühlschlangen, oder durch produktseitige Siedekühlung thermostatisiert.

Die Verweilzeit des zu polymerisierenden Isobutens im Reaktor liegt je nach Reaktionsbedingungen und gewünschten Eigenschaften des herzustellenden Polymerisats im Bereich von 1 bis 120 Minuten, vorzugsweise im Bereich von 5 bis 60 Minuten.

Zur Aufarbeitung wird der Reaktionsaustrag zweckmäßigerweise in ein Medium geleitet, das den Polymerisationskatalysator desaktiviert und auf diese Weise die Polymerisation abbricht. Dazu können beispielsweise Wasser, Alkohole, Ether, Acetonitril, Ammoniak, Amine oder wässrige Lösungen von Mineralbasen, wie Alkalimetall- und Erdalkalimetall-Hydroxidlösungen, Lösungen von Carbonaten dieser Metalle u. ä. verwendet werden. Bevorzugt wird ein Abbruch mit Wasser bei einer Temperatur von 20 bis 40 °C, beispielsweise in Form einer Druckwäsche. Die Temperatur des verwendeten Wassers richtet sich nach der angestrebten Mischtemperatur, bei der die Phasentrennung stattfindet. Im weiteren Gang der Aufarbeitung wird das Polymerisationsgemisch gegebenenfalls einer oder mehreren Extraktionen zur Entfernung von Restmengen an Katalysator - üblicherweise Methanol- oder Wasserwäschen - unterworfen. Bei der Wasserwäsche wird außer dem Katalysator auch im Zuge der Polymerisation entstandener Fluorwasserstoff entfernt. Anschließend werden destillativ nicht umgesetztes Isobuten, Lösungsmittel und flüchtige Isobutenoligomere abgetrennt. Der Sumpf wird von Resten des Lösungsmittels und Monomeren, beispielsweise über Dünnschichtverdampfer, Fallfilmverdampfer, Ringspaltverdampfer oder Sambay-Verdampfer, befreit, gegebenenfalls unter Zusatz von Wasserdampf oder Stickstoffgas.

Wird Reinisobuten als Ausgangsstoff verwendet, kann dieses, ebenso wie Isobutenoligomere und Lösungsmittel, in die Polymerisation zurückgeführt werden. Bei Verwendung von isobutenhaltigen C₄-Schnitten werden das nichtumgesetzte Isobuten und die übrigen C₄-Kohlenwasserstoffe im Allgemeinen nicht zurückgeführt, sondern anderen Verwendungen zugeführt, beispielsweise der Herstellung von niedermolekularem Polyisobuten oder von Methyl-t-butylether. Leichtflüchtige Fluor-haltige Nebenprodukte, wie sek.- und tert.-Butylfluorid, können vom Polyisobuten zusammen mit den anderen Kohlenwasserstoffen entfernt und destillativ oder extraktiv von diesen Kohlenwasserstoffen abgetrennt werden.

Das erfindungsgemäße Verfahren ermöglicht es, hochreaktive Polyisobutene sowohl aus Reinisobuten als auch aus isobutenhaltigen Kohlenwasserstoffgemischen herzustellen. Durch das erfindungsgemäße Verfahren können zahlenmittlere Molekulargewichte im Bereich von 500 bis 50000 Dalton, vorzugsweise 500 bis 5000 Dalton, insbesondere 500 bis 2500, bei einem Gehalt an endständigen Doppelbindungen von wenigstens 75 mol-%, vorzugsweise wenigstens 78 mol-%, insbesondere wenigstens 80 mol-% erzielt werden. Darüber hinaus sind die erhaltenen Polyisobutene durch eine enge Molekulargewichtsverteilung charakterisiert. Sie weisen vorzugsweise eine Dispersität M_{w}/Mₙ im Bereich von 1,3 bis 5, insbesondere von 1,3 bis 2, auf.

Die Erfindung wird durch die folgenden Beispiele näher veranschaulicht.

### Beispiele

Man verwendete einen Umlaufreaktor, der aus einem Teflonschlauch mit einem Innendurchmesser von 6 mm und einer Länge von 7,1 m bestand, durch den über eine Zahnradpumpe 1000 l/h Reaktorinhalt im Kreis geführt wurden. Rohr und Pumpe hatten einen Inhalt von 200 ml. Teflonschlauch und Pumpenkopf befanden sich in einem Kältebad mit einer Temperatur von -25 °C. Als Feed wurde ein Kohlenwasserstoffstrom der nachstehenden Zusammensetzung (in Gew.-%) verwendet, der durch selektive Butadien-Hydrierung eines aus einem mit Naphtha betriebenen Steamcracker stammenden C₄-Schnitts erhalten wurde.

| | |
|---|---|
| Isobutan | 3 |
| n-Butan | 14 |
| Isobuten | 28 |
| 1-Buten | 23 |
| cis-2-Buten | 11 |
| trans-2-Buten | 21 |
| Butadien | 0,050 |

Der Feedzulauf betrug 700 g/h. Der Feed wurde über Molekularsieb 3 Å bei 5 °C auf einen Wassergehalt von weniger als 3 ppm getrocknet, auf -25 °C vorgekühlt und dem Umlaufreaktor zugeführt. BF₃ und Komplexbildner wurden in den in der nachstehenden Tabelle angegebenen Mengen auf der Saugseite der Umwälzpumpe direkt in den Umlaufreaktor eingespeist. Der Austrag wurde unmittelbar nach Verlassen des Umlaufreaktors mit aliqoten Wassermengen in einer Mischpumpe gequencht, die Wasserphase wurde abgetrennt und die organische Phase über Molekularsieb 3 Å getrocknet. Nach Entfernen von Leichtsiedern und Isobutenoligomeren bei 220 °C und 2 mbar wurden das Molekulargewicht M_{W}, M_{N}, und der Vinylidengruppengehalt des erhaltenen Rückstands bestimmt.

Die Ergebnisse sind in der nachfolgenden Tabelle zusammengestellt. Die Reaktorinnenemperatur betrug in allen Beispielen etwa -18 °C, die stationäre Isobutenkonzentration etwa 4,1 Gew.-%.

| Bsp. | BF₃ [mmol/h] | Methanol [mmol/h] | Aceton [mmol/h] | 2-Ethylhexanol [mmol/h] | Molgewicht M_{N} | M_{W}/M_{N} | Vinyliden [%] |
|---|---|---|---|---|---|---|---|
| vgl. | 8,55 | 15,75 | - | 0,43 | 980 | 1,65 | 90 |
| 1 | 6,78 | 14,06 | 0,34 | 1,49 | 930 | 1,61 | 90 |
| 2 | 5,01 | 11,25 | 0,69 | 2,52 | 960 | 1,64 | 88 |
| 3 | 4,42 | 8,44 | 1,03 | 1,22 | 930 | 1,62 | 86 |

Die Ergebnisse zeigen, dass bei Mitverwendung kleiner Mengen Aceton der Einsatz von BF₃ verringert werden kann, ohne die Eigenschaften des erhaltenen Polyisobutens zu beeinträchtigen.

## Patentansprüche

1. Verfahren zur Herstellung von Polyisobuten mit einem Gehalt an endständigen Vinylidengruppierungen von wenigstens 75 mol-%, bei dem man Isobuten oder isobutenhaltige Kohlenwasserstoffgemische in flüssiger Phase in Gegenwart eines Bortrifluorid-Komplex-Katalysators der Zusammensetzung
(BF₃)ₐ · L¹_{b} · L²_{c} · L³_{d}
polymerisiert, wobei
- L¹ für Wasser, ein primäres C₁-C₅-Alkanol und/oder ein sekundäres C₃-C₅-Alkanol steht,
- L² für wenigstens einen Aldehyd und/oder ein Keton steht,
- L³ für einen Ether mit wenigstens 5 Kohlenstoffatomen, ein sekundäres Alkanol mit wenigstens 6 Kohlenstoffatomen, ein primäres Alkanol mit wenigstens 6 Kohlenstoffatomen und/oder ein tertiäres Alkanol steht,
- das Verhältnis b:a im Bereich von 0,9 bis 3,0 liegt,
- das Verhältnis c:a im Bereich von 0,01 bis 0,5 liegt,
- das Verhältnis d:a im Bereich von 0 bis 1,0 liegt.

2. Verfahren nach Anspruch 1, wobei L¹ unter Wasser, Methanol, Ethanol, 2-Propanol und 1-Propanol ausgewählt ist.

3. Verfahren nach Anspruch 1 oder 2, wobei L² unter Formaldehyd, Acetaldehyd, Propionaldehyd, n-Butyraldehyd, iso-Butyraldehyd, Aceton, Methylethylketon und Diethylketon ausgewählt ist.

4. Verfahren nach Anspruch 1, wobei das Verhältnis d:a im Bereich von 0,1 bis 1 liegt.

5. Verfahren nach Anspruch 4, wobei L³ unter Methyl-tert-butylether, Di-n-butylether, Di-n-hexylether, Dioctylether, ausgewählt ist.

6. Verfahren nach Anspruch 4, wobei L³ unter primären Alkoholen mit β-Verzweigung ausgewählt ist.

7. Verfahren nach Anspruch 6, wobei L³ unter 2-Ethylhexanol, 2-Propylheptanol, den Oxoalkoholen von Di-, Tri- und Tetramerpropylen und Di- und Trimerbuten ausgewählt ist.

8. Verfahren nach Anspruch 4, wobei L³ tert-Butanol ist.

9. Verfahren nach Anspruch 4, wobei L³ unter n-Hexanol und n-Octanol ausgewählt ist.

10. Verfahren nach einem der vorhergehenden Ansprüche zur Herstellung von Polyisobuten mit einem zahlenmittleren Molekulargewicht Mₙ von 500 bis 2500 Dalton.

## Claims

1. A process for preparing polyisobutene having a content of terminal vinylidene groups of at least 75 mol% by polymerizing isobutene or isobutenic hydrocarbon mixtures in the liquid phase in the presence of a boron trifluoride complex catalyst of the composition
(BF₃)ₐ . L¹_{b} . L²_{c} . L³_{d}
where
- L¹ is water, a primary C₁-C₅-alkanol and/or a secondary C₃-C₅-alkanol,
- L² is at least one aldehyde and/or one ketone,
- L³ is an ether having at least 5 carbon atoms, a secondary alkanol having at least 6 carbon atoms, a primary alkanol having at least 6 carbon atoms and/or a tertiary alkanol,
- the b:a ratio is in the range from 0.9 to 3.0,
- the c:a ratio is in the range from 0.01 to 0.5,
- the d:a ratio is in the range from 0 to 1.0.

2. The process according to claim 1, wherein L¹ is selected from water, methanol, ethanol, 2-propanol and 1-propanol.

3. The process according to claim 1 or 2, wherein L² is selected from formaldehyde, acetaldehyde, propionaldehyde, n-butyraldehyde, isobutyraldehyde, acetone, methyl ethyl ketone and diethyl ketone.

4. The process according to claim 1, wherein the d:a ratio is in the range from 0.1 to 1.

5. The process according to claim 4, wherein L³ is selected from methyl tert-butyl ether, di-n-butyl ether, di-n-hexyl ether and dioctyl ether.

6. The process according to claim 4, wherein L³ is selected from primary alcohols having β-branching.

7. The process according to claim 6, wherein L³ is selected from 2-ethylhexanol, 2-propylheptanol, the oxo alcohols of dimeric, trimeric and tetrameric propylene, and di- and trimeric butene.

8. The process according to claim 4, wherein L³ is tert-butanol.

9. The process according to claim 4, wherein L³ is selected from n-hexanol and n-octanol.

10. The process according to any of the preceeding claims for preparing polyisobutene having a number-average molecular weight Mₙ of from 500 to 2500 dalton.

## Revendications

1. Procédé de préparation de polyisobutène ayant une teneur en groupements vinylidène terminaux d'au moins 75 moles %, dans lequel on polymérise de l'isobutène ou des mélanges d'hydrocarbures contenant de l'isobutène en phase liquide, en présence d'un catalyseur à base de complexe de trifluorure de bore de la composition :
(BF₃)ₐ . L¹_{b} . L²_{c} . L³_{d}
dans laquelle
- L¹ représente de l'eau, un alcanol en C₁-C₅ primaire et/ou un alcanol en C₃-C₅ secondaire,
- L² représente au moins un aldéhyde et/ou une cétone,
- L³ représente un éther comportant au moins 5 atomes de carbone, un alcanol secondaire comportant au moins 6 atomes de carbone, un alcanol primaire comportant au moins 6 atomes de carbone et/ou un alcanol tertiaire,
- le rapport b:a est de l'ordre de 0,9 à 3,0,
- le rapport c:a est de l'ordre de 0,01 à 0,5,
- le rapport d:a est de l'ordre de 0 à 1,0.

2. Procédé suivant la revendication 1, dans lequel L¹ est choisi parmi de l'eau, du méthanol, de l'éthanol, du 2-propanol et du 1-propanol.

3. Procédé suivant la revendication 1 ou 2, dans lequel L² est choisi parmi du formaldéhyde, de l'acétaldéhyde, de l'aldéhyde propionique, de l'aldéhyde n-butyrique, de l'aldéhyde isobutyrique, de l'acétone, de la méthyléthylcétone et de la diéthylcétone.

4. Procédé suivant la revendication 1, dans lequel le rapport d:a est de l'ordre de 0,1 à 1.

5. Procédé suivant la revendication 4, dans lequel L³ est choisi parmi de l'éther méthyl-tert-butylique, de l'éther di-n-butylique, de l'éther di-n-hexylique, de l'éther dioctylique.

6. Procédé suivant la revendication 4, dans lequel L³ est choisi parmi des alcools primaires présentant une ramification β.

7. Procédé suivant la revendication 6, dans lequel L³ est choisi parmi du 2-éthylhexanol, du 2-propylheptanol, les oxoalcools de propylène dimère, trimère et tétramère et de butène dimère et trimère.

8. Procédé suivant la revendication 4, dans lequel L³ est du tert-butanol.

9. Procédé suivant la revendication 4, dans lequel L³ est choisi parmi du n-hexanol et du n-octanol.

10. Procédé suivant l'une des revendications précédentes, pour la préparation de polyisobutène ayant un poids moléclaire moyen numérique Mₙ de 500 à 2500 Daltons.
